(19)

**Europäisches Patentamt**

**European Patent Office**

**Office européen des brevets**

(11) **EP 2 584 493 B1**

(12) **EUROPÄISCHE PATENTSCHRIFT**

(45) Veröffentlichungstag und Bekanntmachung des
Hinweises auf die Patenterteilung:
**19.06.2019 Patentblatt 2019/25**

(51) Int Cl.:
***G06K 9/00*** *(2006.01)*

(21) Anmeldenummer: **12188664.2**

(22) Anmeldetag: **16.10.2012**

(54) **Verfahren zur Unterscheidung zwischen einem realen Gesicht und einer zweidimensionalen Abbildung des Gesichts in einem biometrischen Erfassungsprozess**

Method for distinguishing between a real face and a two-dimensional image of the face in a biometric recording process

Procédé de distinction entre un visage réel et une représentation bidimensionnelle du visage dans un processus d'enregistrement biométrique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.10.2011 DE 102011054658**

(43) Veröffentlichungstag der Anmeldung:
**24.04.2013 Patentblatt 2013/17**

(73) Patentinhaber: **BioID AG
6072 Sachseln (CH)**

(72) Erfinder:
• **Frischholz, Robert
90427 Nürnberg (DE)**
• **Strohm, Peter
90409 Nürnberg (DE)**

(74) Vertreter: **Liesegang, Eva
Boehmert & Boehmert
Anwaltspartnerschaft mbB
Pettenkoferstrasse 22
80336 München (DE)**

(56) Entgegenhaltungen:
• **BING-ZHONG JING ET AL: "Anti-spoofing system for RFID access control combining with face recogntion", MACHINE LEARNING AND CYBERNETICS (ICMLC), 2010 INTERNATIONAL CONFERENCE ON, IEEE, PISCATAWAY, NJ, USA, 11. Juli 2010 (2010-07-11), Seiten 698-703, XP031759655, ISBN: 978-1-4244-6526-2**

• **WEI BAO ET AL: "A liveness detection method for face recognition based on optical flow field", IMAGE ANALYSIS AND SIGNAL PROCESSING, 2009. IASP 2009. INTERNATIONAL CONFERENCE ON, IEEE, PISCATAWAY, NJ, USA, 11. April 2009 (2009-04-11), Seiten 233-236, XP031468476, ISBN: 978-1-4244-3987-4**

• **BARNEA D I ET AL: "A CLASS OF ALGORITHMS FOR FAST DIGITAL IMAGE REGISTRATION", IEEE TRANSACTIONS ON COMPUTERS, IEEE SERVICE CENTER, LOS ALAMITOS, CA, US, Bd. C-21, Nr. 2, 1. Februar 1972 (1972-02-01), Seiten 179-186, XP008055178, ISSN: 0018-9340**

• **BRUCE LUCAS ET AL: "An Interative Image Registration Technique with an Application to Stereo Vision", PROCEEDINGS OF THE INTERNATIONAL JOINT CONFERENCE ON ARTIFICIAL INTELLIGENCE, XX, XX, 24. August 1981 (1981-08-24), Seiten 674-679, XP002427041,**

• **TOMASI C ET AL: "Detection and tracking of point features", INTERNET CITATION, 1. April 1991 (1991-04-01), Seiten 1-22, XP002561179, Gefunden im Internet: URL:http://citeseer.ist.psu.edu/viewdoc/download?doi=10.1.1.131.5899&rep=rep1&type=pdf [gefunden am 2009-12-15]**

• **Thorsten Hermes: "Digitale Bildverarbeitung - Eine praktische Einführung", 2005, Carl Hanser Verlag, München Wien, XP002700269, ISBN: 3-446-22969-8 Seiten 134-135, * Seite 135, Absatz 1 - Absatz 4; Abbildung 10.4 ***

**Beschreibung**

Die Erfindung betrifft ein Verfahren zur Unterscheidung zwischen einem realen Gesicht und einer zweidimensionalen Abbildung des Gesichts in einem biometrischen Erfassungsprozess und ein Verfahren zur Identifizierung einer Person, die das genannte Unterscheidungsverfahren verwendet.

Die biometrische Identifikation von Personen aufgrund von Gesichtserkennung ist bekannt. Digitale Aufnahmen eines Gesichts können beispielsweise mit einer Referenz-Fotografie des Gesichts abgeglichen werden, die z.B. nach den Vorgaben der ICAO (Internationale Zivilluftfahrt-Organisation) gemäß dem biometrischen Standard ICAO 9303 (Photograph Guideline) aufgenommen wurde. Der Abgleich zwischen digitaler Aufnahme und Foto wird routinemä-ßig an vielen an Grenzstationen vorgenommen. Es ist auch möglich, die digitale Aufnahme einer Person mit einer in einer Datenbank gespeicherten Aufnahme derselben Person abzugleichen, um dieser Person Zugang zu Anlagen, Rechnern, Anwendungen im Internet und dergleichen zu gewähren. Ein Verfahren zur biometrischen Personenerkennung ist beispielsweise in dem deutschen Patent DE 198 47 261 beschrieben.

Biometrische Personenerkennungsverfahren gelten als besonders zuverlässig, weil sie personenspezifische Merkmale verwenden. Jedoch ist die biometrische Personenerkennung nicht vollständig sicher gegen Fälschungen. Bei der Gesichtserkennung besteht beispielsweise die Gefahr, dass sich eine Person nicht mit ihrem eigenen realen Gesicht identifiziert, sondern mit Hilfe des Fotos einer anderen Person, wenn bei der Überprüfung keine übergeordnete Kontrollperson anwesend ist. So ist es beispielsweise möglich, dass sich eine Person in einer verteilten IT-Infrastruktur, wie einer Cloud-Rechenumgebung, oder zur Nutzung einer Anwendung im Internet durch Gesichtserkennung identifiziert, um Zugang zu einem bestimmten System oder einer Anwendung zu erhalten. Dies kann die Person in der Regel von einem beliebigen Ort aus, auch von zuhause, durchführen. Für solche Fälle muss ausgeschlossen werden können, dass sich eine Person anstatt mit ihrem realen Gesicht mit einem Foto identifiziert.

Zwischen einem realen Gesicht und seiner Abbildung kann unterschieden werden, indem geometrische Merkmale ausgewertet werden, um zwischen der zweidimensionalen Ebene des Fotos und der dreidimensionalen Struktur des Gesichtes zu unterscheiden. Im Stand der Technik ist es bekannt, diese geometrischen Aspekte aus mindestens zwei Aufnahmen mittels Stereoskopie abzuleiten, wobei mit Hilfe von kalibrierten Kameras eine dreidimensionale Struktur bestimmt wird. Das Prinzip der Stereoskopie beruht darauf, dass ähnlich wie mit dem menschlichen Augen ein Objekt gleichzeitig aus zwei Blickwinkeln betrachtet/aufgenommen wird. Dann werden die Positionen vorgegebener typischer Merkmale des Gesichts, z. B. Mundwinkel, Nasenspitze etc., in beiden Bildern bestimmt, und aus der Differenz wird die Tiefeninformation ermittelt. So kann zwischen einem dreidimensionalen Gesicht und einem zweidimensionalen Foto unterschieden werden. Dieses Verfahren erfordert jedoch die Verwendung von Spezialkameras und ist daher für viele Anwendungsfälle nicht praktikabel.

Auf dem Gebiet der Gesichtserkennung ist es z. B. auch bekannt, mehrere Aufnahmen einer Person zu machen und durch den Vergleich der Aufnahmen zu ermitteln, ob intrinsische Bewegungen innerhalb des Gesichts vorhanden sind, um den Gebrauch eines Fotos auszuschließen. Die US 2009/0135188 A1 beschreibt ein System zur biometrischen Identifikation und Verifikation einer Person und zur Unterscheidung zwischen einem realen menschlichen Gesicht und einem Foto des Gesichts durch Online-Erfassung physiologischer Bewegungen des Gesichtes. Zur Ermittlung der Gesichtsbewegung werden charakteristische Bereiche, wie die Augen und der Mund lokalisiert und der Abstand zwischen dem Zentrum des Gesichtes und den Koordinaten, beispielsweise der Augen und des Mundes, berechnet. Wird keine Bewegung des Gesichts erfasst, so wird angenommen, dass es sich um ein Foto handelt. Zusätzlich wird ermittelt, ob sich auch die Umgebung außerhalb des Gesichtsbereiches bewegt, und wenn ja, wird angenommen, dass es sich um ein Foto des Gesichtes handelt. Das Verfahren erfordert die Lokalisierung charakteristischer Bereiche des Gesichtes, wie der Augen und des Mundes, und erscheint insgesamt nicht sehr zuverlässig zu sein.

Die EP 1 434 163 B1 beschreibt ein Verfahren zur Erfassung und Verifikation eines Gesichts mit biometrischen Verfahren, das ebenfalls auf der Lokalisierung charakteristischer Merkmale des Gesichtes basiert. Auf der Grundlage einer Vielzahl erfasster Daten werden die Erscheinungsformen unterschiedlicher Gesichtshaltungen berechnet, um für jede Person ein eigenes "Dictionary" anzulegen, das beispielsweise die Unterschiede im Abstand zwischen den Augen oder zwischen den Augen und der Nase abhängig von unterschiedlichen Gesichtshaltungen enthält. Das Verfahren erscheint sehr rechen- und speicherintensiv und mag sich für geschlossene Systeme eignen, nicht aber für verteilte IT-Strukturen, wie Cloud-Rechenumgebungen, die Nutzern Beschränkungen hinsichtlich der übertragbaren Datenmengen und nutzbaren Rechenleistungen auferlegen.

Für solche Umgebungen wäre es ideal, die Personenerkennung auf der Grundlage eines geringen Datensatzes von beispielsweise zwei bis fünf oder maximal zehn Bildern realisieren zu können. Die Identifikation und Verifikation sollte mit geringem Rechenaufwand und anhand möglichst nur eines Vergleichsbildes möglich sein, um die Speicher- und Rechenressourcen des Systems ökonomisch zu nutzen.

Chia-Ming Wang et al. beschreiben in "Distinguishing Falsification of Human Faces from True Faces based on Optical Flow Information" in IEEE International Symposium on Circuits and Systems, 2009, ein System zur Unterscheidung zwischen einem realen Gesicht und einer zweidimensionalen Abbildung, also einem Foto, des Gesichts anhand von Bewegungsmodellen. Mit Hilfe eines optischen-Flussverfahrens wird auf der Grundlage von wenigstens fünf aufeinander folgenden Bildern ein Bewegungsmodell erstellt, wobei das Bewegungsmodell für echte Gesichter und fotografische Abbildungen unterschiedlich sein wird, und diese Unterschiede ausgewertet werden können, um zwischen realen Gesichtern und Fotografien zu unterscheiden. Ein LDA (Lineare Diskriminanzanalyse)-basiertes Lernverfahren und ein Bayes-Klassifikator werden eingesetzt, um die Bewegungsfelder echter Gesichter und solche von Fotografien zu unterscheiden. Das Verfahren erzielt gute Ergebnisse, erfordert jedoch erhebliche Rechen- und Speicherressourcen sowie eine hohe Datenübertragungsleistung, wenn es in einer verteilten IT-Umgebung eingesetzt werden soll. Ferner erfordert es einen nicht unaufwendigen Trainings-Prozess anhand verschiedener Testgesichter, bevor es einsatzbereit ist.

Tanzeem Choudhury et al. beschreiben in "Multimodal Person Recognition using Unconstrained Audio and Video", MIT Media Lab AV BPA, 1999, dass es grundsätzlich möglich ist, in der Gesichtserkennung zur Unterscheidung von realen Gesichtern und Fotografien eine Bewegungsanalyse durchzuführen und anhand dieser die Tiefe jedes Merkmals abzuschätzen. Es wird angenommen, dass Objekte, deren Merkmale alle dieselbe Tiefe haben, Fotografien sind, während andere Objekte reale Gesichter sind. Irgendwelche Einzelheiten, wie dieses Verfahren durchgeführt wird, sind nicht beschrieben.

Chao-Kuei Hsieh et al. beschreiben in "An Optical Flow-Based Approach to Robust Face Recognition Under Expression Variations", IEEE Transactions on Image Processing, 2010, ein Gesichtserkennungsverfahren unter Verwendung optischer Flussmethoden, wobei der optische Fluss innerhalb eines Gesichts berechnet wird, um Unterschiede in verschiedenen Gesichtsausdrücken auszugleichen.

Bruce D. Lucas et al. beschreiben in "An Iterative Image Registration Technique with an Application to Stereo Vision", Proceedings of Imaging Understanding Workshop, 1981, ein Verfahren zum Lokalisieren eines Templates G(x) innerhalb eines Bildes F(x) unter Verwendung der $L_1$-Norm und der $L_2$-Norm und erläutern verschiedene Techniken der Korrelation, einschließlich den Sequential Similarity Detection-Algorithmus (SSDA).

Optische Korrelationsverfahren, die bei der vorliegenden Erfindung zum Einsatz kommen können, sind auch in der Dissertation des Erfinders: R. Frischholz, "Beiträge zur Automatischen Dreidimensionalen Bewegungsanalyse" (ISBN3-8265-3733-5), Dissertation, Shaker Verlag, 1998, erläutert. Auf die genannten Schriften, insbesondere auf die dortigen Erläuterungen der optischen Flussverfahren und Korrelationsmethoden wird ausdrücklich Bezug genommen.

Die Publikation von Jing et al., "Anti-Spoofing System for RFID Access Control combining with Face Recognition", International Conference on Machine Learning and Cybernetics, p. 698-703, 2010, und das Paper von Bao et al., "A Liveness Detection Method for Face Recognition based on Optical Flow Field", International Conference on Image Analysis and Signal Processing, p. 233-236, 2009, offenbaren weitere Verfahren zur Unterscheidung von realen Gesichtern und Fotografien, welche - inter alia - auf der Analyse des optischen Flusses basieren. Aus dem Stand der Technik ist es somit bekannt, optische Flussverfahren einzusetzen, um bei der biometrischen Gesichtserkennung zwischen realen Gesichtern und fotografischen Abbildungen unterscheiden zu können. Als optischer Fluss wird in der Bildverarbeitung und in der optischen Messtechnik ein Vektorfeld bezeichnet, das die Bewegungsrichtung und -geschwindigkeit für jeden Bildpunkt (Pixel) einer Bildsequenz angibt. Der optische Fluss kann eine Ausgangsbasis für die Erkennung dreidimensionaler Strukturen, zur Schätzung von Bewegungen im Raum und für die Erkennung einzelner bewegter Objekte bilden. Die klassischen optischen Flussverfahren arbeiten differenziell, d. h. auf der Grundlage von Ableitungen und Gradienten des Grauwertsignals, die bildpunktweise gebildet werden. Die Berechnung des optischen Flusses mit Hilfe differenzieller Verfahren geht auf ein 1981 am MIT (Massachusetts Institute of Technology) entwickeltes Verfahren von Berthold Horn und Brian Schunk zurück. (Berthold K.P. Horn et al., "Determining Optical Flow", Artificial Intelligence, Band 17, Nr. 1-3, SS. 185-203, 1981).

Während die optischen Flussverfahren sich theoretisch eignen, um zwischen Aufnahmen realer Personen und fotografischen Abbildungen zu unterscheiden, stellen sich in der Praxis eine Reihe von Problemen: Die pixelweise Berechnung des optischen Flusses erfordert hohe Rechenressourcen, die eine Überprüfung innerhalb vertretbarer Zeiträume erschwert. Aufgrund der hohen Rauschanteile in den Pixeln der digitalen Aufnahmen ist es notwendig, die erzeugten Flussvektoren über eine Vielzahl von Bildern zu glätten, wodurch wiederum die Datenmenge und der Rechenaufwand erhöht werden. Gleichwohl bleiben die optischen Flussmethoden fehleranfällig.

Es ist eine Aufgabe der Erfindung, ein Verfahren zur Unterscheidung zwischen einem realen Gesicht und einer zweidimensionalen Abbildung des Gesichtes in einem biometrischen Erfassungsprozess anzugeben, das robust ist und auf der Grundlage von schon einer geringen Anzahl von Aufnahmen mit möglichst geringem Rechenaufwand realisiert werden kann.

Diese Aufgabe wird durch ein Verfahren mit den Merkmalen von Patentanspruch 1 gelöst. Bevorzugte Ausführungen sind in den abhängigen Ansprüchen angegeben.

Bei dem erfindungsgemäßen Verfahren zur Unterscheidung zwischen einem realen Gesicht und einer zweidimensionalen Abbildung des Gesichts in Form eines gekrümmten Fotos werden (a) in zeitlicher Folge nacheinander mindestens zwei digitale Aufnahmen des Gesichts oder seiner Abbildung gemacht, (b) jede der Aufnahmen in eine Vielzahl von Bildelementen zerlegt, wobei jedes Bildelement eine Vielzahl von Pixeln umfasst, (c) die Verschiebungen einzelner Bildelemente von der ersten zu der zweiten Aufnahme durch Korrelation ermittelt und daraus ein Verschiebungsvektorfeld generiert und (d) das Verschiebungsvektorfeld gemäss dem kennzeichnenden Teil des Anspruchs 1 analysiert, um zu entscheiden, ob die Aufnahmen von dem realen Gesicht oder von seiner Abbildung gemacht wurden. Die Erfindung ermöglicht es, schon anhand zweier digitaler zweidimensionaler Aufnahmen eines Gesichtes zu ermitteln, ob es sich bei dem Gesicht um ein reales, dreidimensionales Gesicht oder ein zweidimensionales Foto des Gesichtes handelt. Die Erfindung nutzt für die Unterscheidung zwischen realen dreidimensionalen Gesichtern und Fotos die unterschiedlichen geometrischen Merkmale aus.

Hierzu setzt die Erfindung Kenntnisse aus dem Gebiet der Bewegungsanalyse ein und nutzt Verfahren, die aus der Particle Image Velocimetry (PIV) bekannt sind.

PIV ist an und für sich ein optisches Verfahren zur Bestimmung von Geschwindigkeitsfeldern in strömenden Medien. Hierbei werden in kurzen zeitlichen Abständen Partikel in einen Fluid fotografiert, und aus der Partikelposition auf den Bildern wird die Bewegungsrichtung und -geschwindigkeit näherungsweise ermittelt. Das am schwierigsten zu erfassende Szenario ist hierbei, wenn in dem strömenden Medium keine markanten Merkmale ausgemacht werden können, z. B. bei fließenden Wasser, Nebel- oder Luftströmung. In diesem Fall werden dem Fluid üblicherweise eine Vielzahl kleiner Kügelchen zugesetzt, die dann in der PIV erfasst und verfolgt werden. Das zu untersuchende Gebiet wird in eine Vielzahl von Feldern aufgeteilt, und mit Korrelationsmethoden wird der Verschiebungsvektor der Partikel in den Feldern über der Zeit bestimmt. Aus einer Vielzahl von Verschiebungsvektoren oder Flussvektoren wird dann ein Flussvektorfeld extrahiert, aus dem die Strömungsgeschwindigkeit abgeleitet werden kann.

Die Erfindung wendet nun ein ähnliches Verfahren wie die Particle Image Velocimetry (PIV) an, nicht um die Geschwindigkeit einer Strömung zu ermitteln, sondern um zwischen einem realen, dreidimensionalen Gesicht und seiner zweidimensionalen Abbildung zu unterscheiden. Das bei der PIV übliche Einbringen von Partikeln kann unterbleiben, weil die in Rede stehenden Objekte, nämlich Gesichter, eine Eigentextur haben, so dass von den PIV-Verfahren nur die Zerlegung des Bildes und die Korrelationsberechnung übernommen werden. Anders bei den oben geschriebenen optischen Flussverfahren beruht das erfindungsgemäße Verfahren jedoch nicht auf einer Analyse auf Pixelebene, sondern auf einer Analyse der Aufnahmen auf der Ebene von Bildelementen oder Feldern, in die die Aufnahme aufgeteilt wird. Schon ab der zweiten digitalen Aufnahme des Bildes lässt sich mit dem erfindungsgemäßen Verfahren für jedes Bildelement ein Verschiebungsvektor oder Flussvektor und hieraus ein Verschiebungsvektorfeld oder Flussvektorfeld ableiten. Die Verschiebungsvektorfelder haben nun völlig verschiedene Charakteristiken, je nach dem, ob es sich um die Aufnahme eines ebenen Fotos oder eines realen, dreidimensionalen Gesichtes handelt. Die Erfindung wertet diese unterschiedlichen Charakteristika aus, um ein Foto von einem realen Gesicht zu unterscheiden. Anders als in dem oben beschriebenen Stand der Technik erfolgt diese Auswertung nicht mit Hilfe eines trainierten Klassifikators, sondern durch analytische Trennung der Flussvektorfelder in zwei Klassen, welche einer zweidimensionalen Abbildung beziehungsweise einem realen dreidimensionalen Gesicht entsprechen. Dies ist im Folgenden mit weiteren Einzelheiten beschrieben.

Der erfindungsgemäß eingesetzte Algorithmus ist im Vergleich zu den verschiedenen Verfahren des Stands der Technik weniger rechenintensiv und kann schon auf der Grundlage weniger digitaler Aufnahmen ein zuverlässiges Ergebnis liefern. Die oben beschriebenen optischen Flussverfahren berechnen Ableitungen der Intensitätswerte entlang der Zeit und sind somit wesentlich fehleranfälliger und benötigen mehrere aufeinander folgende Bilder, um Abweichungen herauszufiltern.

In der Regel wird das erfindungsgemäße Verfahren für jedes Bildelement einen Verschiebungsvektor auf der Grundlage der Position desselben Bildelements in der ersten Aufnahme und der zweiten Aufnahme erzeugen. Es ist jedoch auch denkbar, dass für einzelne Bildelemente kein Verschiebungsvektor erzeugt wird, wie unten noch erläutert ist.

Bei dem erfindungsgemäßen Verfahren wird vorzugsweise als erster Verarbeitungsschritt in jeder Aufnahme das Gesicht lokalisiert, und die Aufnahme wird für die Weiterverarbeitung auf einen definierten Gesichtausschnitt begrenzt. Verfahren zur Gesichtslokalisierung sind aus dem Stand der Technik bekannt. Ein geeignetes Verfahren ist beispielsweise in dem Europäischen Patent EP 1 119 822 B1 desselben Erfinders beschrieben. Durch diesen Schritt wird sichergestellt, dass die gleichen Gesichtsausschnitte in zwei aufeinander folgende Abbildungen verglichen werden und dass die miteinander zu vergleichenden Aufnahmen das zu untersuchende Gesicht weitgehend formatfüllend abbilden.

Die Aufnahmen werden vorzugsweise in ein regelmäßiges Raster von N x M-Feldern aufgeteilt, welche die Bildelemente bilden. Die Anzahl der Felder liegt vorzugsweise in der Größenordnung zwischen 64 und 256 wobei sich gezeigt hat, dass mindestens 20 Bildelemente genutzt werden sollten, um ein brauchbares Ergebnis zu liefern. In einer bevorzugten Ausführung gilt N = M, wobei die Abbildungen insbesondere in 8 x 8 oder 16 x 16 Felder aufgeteilt werden.

Wie eingangs erläutert werden Verschiebungsvektoren ermittelt, welche die Verschiebung einzelner Bildelemente oder Felder von einer Aufnahme zur nächsten beschreiben. Diese Verschiebungsvektoren können durch unterschiedliche Korrelationsverfahren bestimmt werden, wobei das bekannteste Verfahren die Kreuzkorrelation ist. Bei der Korrelation der Bildelemente werden erfindungsgemäß die Bildintensitäten zwischen einem Bildelement der ersten Aufnahme und der zweiten Aufnahme in Beziehung gesetzt. In der bevorzugten Ausführung der Erfindung basiert das Verfahren auf Grauwerten der Abbildung und berücksichtigt keine Farbwerte.

Der Abgleich der einzelnen Bildelemente in zwei aufeinander folgenden Aufnahmen zur Ermittlung des Verschiebungsvektors wird im Stand der Technik auch als Template-Matching bezeichnet. Für die Kreuzkorrelation, die in der Literatur häufig als MCC (Maximum Cross Correlation) bezeichnet wird, gilt:

$$ i\left(u,v\right) = \frac{\left(\sum_{x}\sum_{y} f\left(u+x,v+y\right)g\left(x,y\right)\right)^{2}}{\sum_{x}\sum_{y} f\left(u+x,v+y\right)^{2} \sum_{x}\sum_{y} g\left(x,y\right)^{2}} $$

wobei i(u,v) der Kreuzkorrelationskoeffizient (CCC Cross Correlation Coefficient) ist. Das Koordinatenpaar (u,v), welches den maximalen Koeffizienten i(u,v) bestimmt, ist die Position der besten Übereinstimmung zwischen der Aufnahme f und dem Bildelement oder Template g und ergibt somit den Verschiebungsvektor, wobei x die Breite des Templates indiziert, y die Höhe des Templates indiziert, und f(u,v) den Bildausschnitt der Aufnahme an der Position (u,v) bestimmt.

Die Kreuzkorrelation hat unter anderem folgende Eigenschaften: Durch die Normierung wird sichergestellt, dass der Korrelationswert immer zwischen Null (schlechteste Übereinstimmung) und Eins (perfekte Übereinstimmung) liegt. Durch die Normierung der Gesamtintensitäten wird bei ungleichmäßiger Beleuchtung eine Beleuchtungsunabhängigkeit erzeugt. Allerdings ist die Berechnung der Kreuzkorrelation aufgrund der Vielzahl an Multiplikationen, die in der Realisierung in Fließkomma-Darstellung implementiert werden müssen, relativ rechenaufwendig.

Die Erfindung setzt daher bevorzugt eine Alternative zur Kreuzkorrelation ein, nämlich die Verwendung des $L_1$-Abstandes, also der absoluten Differenz der Intensitäten der Bildelemente oder Templates und der Aufnahmen (SAVD - Sum of Absolute Value of Differences):

$$ i\left(u,v\right) = \sum_{x}\sum_{y}\left| f\left(u+x,v+y\right) - g\left(x,y\right)\right| $$

Die SAVD hat unter anderem folgende Eigenschaften: Die SAVD ist ein Maß für den Abstand zwischen Aufnahme und Bildelement (Template); ein kleinerer Wert steht für einen kleineren Abstand und damit für eine bessere Übereinstimmung. Bei einer perfekten Übereinstimmung von Aufnahme f und Bildelement g erreicht die SAVD den Wert Null. Der maximal erreichbare Wert ist hingegen im Gegensatz zur Kreuzkorrelation nicht fest, sondern abhängig von der Größe des Templates. Es findet keine Normierung der Intensitäten statt; dadurch verhält sich die SAVD empfindlich bei Lichtschwankungen. Die zur Bildung der SAVD nötigen Rechenschritte sind weitaus weniger rechenintensiv als bei der Kreuzkorrelation; die Berechnungen werden zudem in Ganzzahl-Darstellung durchgeführt.

Ein besonderer Vorteil der Berechnung des SAVD-Abstandes ist, dass man im Gegensatz zur Kreuzkorrelation beim Template-Matching mit SAVD-Abstand den Suchvorgang vorzeitig abbrechen kann. Da beim SAVD jeweils das Minimum aller berechneten SAVD-Werte gesucht wird, kann die jeweilige Aufsummierung aller Differenzen bereits dann beendet werden, wenn die aktuelle Summe das letzte bekannte Minimum übersteigt. Bei der Kreuzkorrelation muss dagegen die Summation immer bis zu Ende durchgeführt werden, weil hier das Maximum gesucht wird. Barnea und Silvermann erkannten diese besondere Möglichkeit und veröffentlichten 1972 den sogenannten SSD Sequential Similarity Detection Algorithmus (D. I. Barnea and H. F. Silverman, "A Class of Algorithms for Fast Digital Image Registration" in IEEE Transactions on Computers, C-21, SS. 179-186, Februar 1972), der bei der Erfindung eingesetzt und dessen prinzipieller Ablauf wie folgt beschrieben werden kann:

Berechne Abstand zwischen Template g und Bild f an allen Positionen von g in f. Der minimale Abstand bestimmt die beste Übereinstimmung.

Vergleiche Abstand pro Position mit bisherigem minimalem Abstand.

Falls kleiner: Aktueller Abstand wird minimaler Abstand.

Falls größer: Abbruch und weiter mit der nächsten Position.

Übersetzt auf die vorliegende Erfindung bedeutet dies, dass in einer bevorzugten Ausführung des Verfahrens, die Differenz der Bildintensitäten zwischen einem Bildelement der ersten Aufnahme und der zweiten Aufnahme für eine Reihe von Positionen des Bildelementes in der zweiten Aufnahme berechnet wird, für jede Position in der Reihe von Positionen die Differenz der Bildintensitäten in der aktuellen Position mit der Differenz der Bildintensitäten an der vorhergehenden Position verglichen wird; wenn die Differenz der Bildintensitäten an der aktuellen Position kleiner ist als die Differenz der Bildintensitäten an der vorhergehenden Position, die aktuelle Differenz als minimale Differenz angenommen wird, und wenn die Differenz der Bildintensitäten an der aktuellen Position größer ist als die Differenz der Bildintensitäten an der vorhergehenden Positionen, die vorhergehende Differenz als endgültige minimale Differenz angenommen und der Vergleich abgebrochen und die nächste Position verglichen wird; wobei die Position des Bildelementes in der zweiten Aufnahme der Position entspricht, bei der die endgültige minimale Differenz ermittelt wurde. Es werden somit grundsätzlich alle Positionen untersucht; der Vergleich kann jedoch gegebenenfalls frühzeitig abgebrochen werden.

Ein besonders effektives Verfahren erreicht man, wenn möglichst frühzeitig das absolute Minimum gefunden wird, weil dann alle nachfolgenden Summationen überflüssig werden und das Verfahren abgebrochen werden kann. Es ist daher zweckmäßig sogenannte Ordnungs-Algorithmen einzusetzen, also Algorithmen, die durch eine bestimmte Anordnung der Indizierung im Mittel weniger Summationen bewirken. Die Erfindung sieht daher vorzugsweise vor, dass die Korrelation auf Teilbereiche der Aufnahmen beschränkt wird, die aufgrund der Kenntnis der grundsätzlichen Bildstruktur und/oder der Auswertung vorhergehender Aufnahmen bestimmt werden. Dabei sollte ein solcher Teilbereich nicht größer sein als die Fläche, die durch eine Verschiebung des Bildelementes um seine Kantenlänge in beliebiger Richtung definiert wird. Sitzt ein Bildelement somit beispielsweise in der Ecke der Aufnahme, so wird der Teilbereich maximal die Größe von vier Bildelementen haben. Sitzt ein Bildelement in der Mitte der Aufnahme, so wird der Teilbereich nicht größer sein als die Fläche von 3 x 3 Bildelementen um das zu untersuchende Bildelement herum. In der Bewegungsanalyse mit Template-Matching kann die beschriebene Eigenschaft des SSD-Algorithmus dann besonders vorteilhaft ausgenutzt werden, wenn von dem Mittelpunkt des Suchbereichs ausgehend kreisförmig indiziert wird. Die Suchrichtung kann auch unter Einbeziehung von zuvor gefundenen Verschiebungsvektoren bestimmt werden.

Erfindungsgemäß sind die verschiedenen Vektoren X-, Y-Vektoren, sodass von den Bildelementen jeder Aufnahme ein Raum aufgespannt werden kann, der die Verschiebung der Bildelemente X- und/oder in Y-Richtung wiedergibt.

Zur Optimierung des erfindungsgemäßen Verfahrens werden die Bildelemente vor Ausführung der Korrelation vorzugsweise daraufhin geprüft, ob die Pixel jeweils innerhalb eines Bildelements eine Varianz aufweisen, die größer ist als ein erster Schwellwert. Nur solche Bildelemente werden in der Korrelation weiterverarbeitet, deren Varianz den Schwellwert überschreitet. Durch diese vorgeschaltete Überprüfung ist es möglich, solche Bildelemente "auszusortieren", die voraussichtlich keine brauchbare Information zur Bildung des Verschiebungsvektors enthalten, wie Flächen mit weitgehend gleichmäßiger Intensität, beispielsweise Teile der Backen oder Stirn eines Gesichtes. Dadurch können nicht signifikante Bereiche eines Gesichtes herausgefiltert werden, ohne dass es notwenig wäre, charakteristische Merkmale eines Gesichtes, wie Augen, Nase, Mund, vorab zu lokalisieren. Diese Überprüfung, auch als erstes Gütekriterium bezeichnet, erfolgt rein analytisch und erfordert keine Kenntnis oder Suche der Gesichtsstrukturen.

Ein zweites Gütekriterium kann dadurch eingeführt werden, dass nach Ausführung der Korrelation die Bildelemente und ihre - dann gefundenen - verschobenen Bildelemente verglichen werden. Wenn die Differenz der Intensitäten eines Bildelementes und seines verschobenen Bildelementes über einem zweiten Schwellwert liegt, wird der Verschiebungsvektor dieses Bildelementes verworfen. Wenn nämlich die Intensitäten zweier Bildelemente sehr stark voneinander abweichen, kann daraus geschlossenen werden, dass der Algorithmus zwar ein lokales Minimum gefunden hat, dass es sich aber hierbei nicht um übereinstimmende Bildelemente handelt. Der Schwellwert wird in der Regel empirisch ermittelt und sollte jedenfalls deutlich größer sein als das zu erwartende Rauschen der Aufnahmen.

Während es bei den oben beschriebenen optischen Flussverfahren bekannt ist, nach der Bildung der Flussvektoren die Ergebnisse durch Filtern und Glätten zu "verbessern", nutzt die Erfindung Gütekriterien, die bereits vor oder unmittelbar nach der Korrelation eingesetzt werden, um ein Verschiebungsvektorfeld zu erzeugen, das nur für solche Bildelemente Verschiebungsvektoren enthält, die mit hoher Zuverlässigkeit die Verschiebung der Bildelemente richtig wiedergeben. Dadurch hält man ein robustes, weniger rechenintensives Verfahren.

In einer bevorzugten Ausführung der Erfindung beruht die Auswertung des Verschiebungsvektorfeldes auf der Kenntnis der zu erwartenden Eigenschaften der Vektorfelder bei Aufnahme eines Fotos und bei Aufnahme eines räumlichen Objekts, um letztendlich eine qualifizierte Entscheidung darüber fällen zu können, ob die Aufnahme von einem realen dreidimensionalen Gesichtspunkt gemacht wurde oder nicht. Bei der Aufnahme eines zweidimensionalen Fotos liegen nämlich die Komponenten der Verschiebungsvektoren jeweils in einer gemeinsamen Ebene. Die Änderung der Komponenten der Verschiebungsvektoren von einem Vektor zum nächsten innerhalb des Vektorfeldes ist bei näherungsweise äquidistanten Bildelementen konstant. Bei der Aufnahme des realen Objekts, das räumliche Tiefe aufweist, hängen die Verschiebungsvektoren jedoch sowohl von der Relativbewegung des Objekts zum Aufnahmegerät als auch von den unterschiedlichen Abständen der Objektelemente zu den Bewegungsachsen des Objekts ab. Diese Unterschiede können anhand von Ebenen ausgewertet werden, die den X- bzw. den Y-Komponenten des Vektorfeldes angenähert sind. Die Erfindung berechnet wenigstens eine nicht-ebene analytisch beschreibbare glatte Fläche, die den X- und/oder Y-Komponenten des Vektorfeldes angenähert ist, und ermittelt den Abstand der Vektorkomponenten des Vektorfeldes zu der berechneten Fläche. Vorzugsweise wird eine Fläche für die X-Komponenten des Vektorfeldes und eine Ebene für die Y-Komponenten des Vektorfeldes berechnet. Wenn man davon ausgeht, dass sich vor der Kamera nicht nur ein Foto in Form einer glatten zweidimensionalen Ebene, sondern ein gekrümmtes Foto befinden kann, kann dem Vektorfeld eine nicht-ebene analytische beschreibbare, glatte Fläche angenähert werden, wie ein Polygon oder eine Bezier-Kurve.

Zum einfachen Verständnis wird nachfolgend beispielhaft aufgezeigt, wie dem Vektorfeld eine Ebene angenähert wird. Die Ebene wird vorzugsweise mit einem Näherungsverfahren berechnet, z.B. nach der Methode der kleinsten Fehlerquadrate, um die bestmöglichen Ebenen durch die X-Komponenten und die Y-Komponenten des Verschiebungsvektorfeldes zu berechnen. Die Koordinaten des Verschiebungsvektorfeldes dienen dabei als unabhängige Variablen während die Verschiebungskomponenten x bzw. y als "Höhenwert" z aufzufassen ist. Die allgemeine Ebenengleichung lautet

$$F(x,y) = z = a_0 + a_1 \, x + a_2 \, y$$

Die optimalen Werte für $a_0$, $a_1$ und $a_2$ werden mit den gegebenen z-Werten (den X- oder den Y-Komponenten des Verschiebungsvektorfeldes) und dem Least-Square-Fit-Verfahren berechnet:

$$\Sigma \, (F(x_i, \, y_i) - z_i)^2 \; = \; \min$$

Durch Auflösen der Gleichung nach $a_0$, $a_1$, $a_2$ können jeweils für die X- und die Y-Komponenten des Verschiebungsvektorfeldes die am besten passenden (best-fit-) Ebenen angenähert werden. In einem nächsten Schritt werden die Abweichungen der einzelnen Verschiebungsvektoren zu diesen Ebenen berechnet. Falls sich das Verschiebungsvektorfeld insgesamt linear verhält, also durch ein zweidimensionales Foto entstanden ist, ist zu erwarten, dass die Ebene sehr gut zu dem Vektorfeld passt und somit die Abweichungen gering sind. Sind im umgekehrten Fall viele nichtlineare Veränderungen in den Komponenten des Vektorfeldes, so stellt die berechnete Ebene eine schlechte Annäherung an das Feld dar und die Abweichungen werden im Mittel sehr hoch sein.

Dieser (mittlere) Fehler von Vektorfeldkomponenten zu der angenäherten Ebene bildet das Entscheidungskriterium, ob das Vektorfeld aus zwei Bildern eines zweidimensionalen Fotos oder aus zwei Bildern eines realen räumlichen Objekts generiert wurde.

In einer bevorzugten Ausführungsform kann daher der (mittlere) Abstand der Vektorkomponenten zu der berechneten Fläche mit einem dritten Schwellwert verglichen werden, und abhängig von dem Vergleich wird entschieden, dass die Aufnahmen von einem realen Gesicht gemacht wurden, wenn der Abstand den Schwellwert überschreitet, und dass andernfalls die Aufnahme von einer Abbildung gemacht wurde.

Die Erfindung schafft ein robustes Verfahren zur Unterscheidung zwischen einem realen Gesicht und seiner zweidimensionalen Abbildung, das auf der Grundlage eines festen, über die Abbildung gelegten Rasters arbeitet, ohne dass einzelne charakteristische Merkmale des Gesichts, wie Mund, Ohren, Nase lokalisiert werden müssen. Versuchsreihen mit dem erfindungsgemäßen Verfahren haben gezeigt, dass es möglich ist, mit weniger als 20 Aufnahmen eine zuverlässige Unterscheidung zu treffen. In der bevorzugten Ausführung werden nicht mehr als 10, vorzugsweise nicht mehr als 5 digitale Aufnahme des Gesichts oder seiner Abbildung verwendet. In einer besonders bevorzugten Ausführung der Erfindung arbeitet das Verfahren mit genau zwei digitalen Aufnahmen des Gesichts oder seiner Abbildung. Hierbei ist es vorteilhaft, wenn für die Aufnahme des Gesichts wenigstens zwei unterschiedliche Gesichtspositionen vorgegeben werden, um ein aussagekräftiges Verschiebungsvektorfeld bilden zu können.

Die Erfindung sieht auch ein Verfahren zur Identifizierung einer Person in einer verteilten IT-Infrastruktur, insbesondere in einer Cloudumgebung vor, bei dem zumindest zwei digitale Aufnahmen des Gesichts der Person an einem von der Person entfernten Rechner empfangen und das beanspruchte Unterscheidungsverfahren an einem oder verteilt auf mehrere von der Person entfernten Rechner ausgeführt wird. Eine oder mehrere der Aufnahmen des Gesichts der Person können auch dazu verwendet werden, parallel zur Verifikation der Person die Person zu identifizieren.

Nachfolgend wird zum besseren Verständnis der Erfindung beispielhaft aufgezeigt, wie das Vektorfeld durch wenigstens eine Ebene angenähert wird. Die Erfindung beschränkt sich aber auf eine Annäherung mit wenigstens einer nicht-ebenen analytisch beschreibbaren glatten Fläche gemäss Anspruch 1.

Die Beispiele und bevorzugten Ausführungen der Erfindung sind im Folgenden mit Bezug auf die Zeichnungen näher erläutert. In den Figuren zeigen:

Fig. 1 ein Szenario verschiedener Aufnahmen eines realen Objekts und seines Fotos in unterschiedlichen Stellungen zur Erläuterung der Grundlagen der Erfindung;

Fig. 2    Darstellungen zur Erläuterung der Rotation einer zweidimensionalen Abbildung und des daraus ableitbaren Verschiebungsvektorfeldes;

Fig. 3    Darstellungen zur Erläuterung der Rotation eines realen Objekts und des daraus ableitbaren Verschiebungsvektorfeldes;

Fig. 4    und 5 schematische Darstellungen einer zweidimensionalen Abbildung und eines dreidimensionalen Objekts und der durch Rotation der Abbildung bzw. des Objektes erzeugten Verschiebungsvektorfelder;

Fig. 6    ein zweidimensionales Diagramm zur Veranschaulichung der Berechnung der Ebenennäherung;

Fig. 7    die Abbildung eines realen Gesichtes mit überlagertem Verschiebungsvektorfeld;

Fig. 8    die Abbildung eines zweidimensionalen Fotos mit überlagertem Verschiebungsvektorfeld; und

Fig. 9    ein Flussdiagramm des erfindungsgemäßen Verfahrens zur Unterscheidung zwischen einem realen Gesicht und einer zweidimensionalen Abbildung des Gesichts.

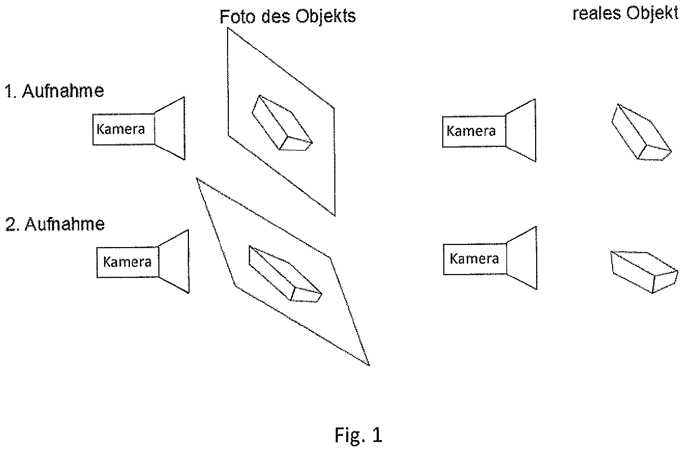

Fig. 1 zeigt schematisch ein Szenario zur Erläuterung der Unterschiede, die sich bei Aufnahme eines realen dreidimensionalen Objekts und seiner zweidimensionalen Abbildung, beispielsweise mit einer digitalen Kamera, ergeben. Fig. 1 zeigt die Folge von zwei Aufnahmen einer zweidimensionalen Abbildung (Foto) eines Objekts sowie des Objektes selbst, wobei zwischen den beiden Aufnahmen das Foto und das Objekt um ihre Mittelachse gedreht werden. Man erkennt, dass die Drehung des Fotos im Vergleich zur Drehung des Objekts in der zweiten Aufnahme eine andere perspektivische Verzerrung des Objekts ergibt. Dieses Phänomen wird von der Erfindung genutzt.

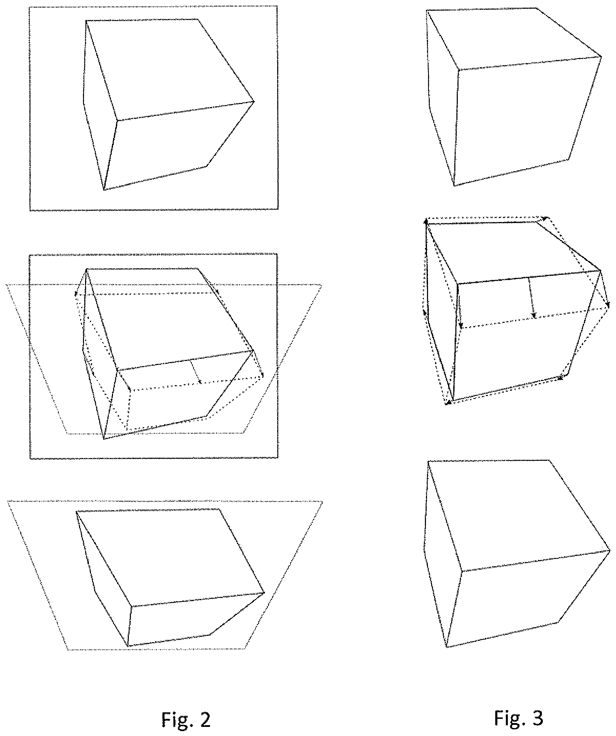

Wie erläutert, werden Verschiebungsvektoren aus der Verschiebung einzelner Bildelemente innerhalb der Aufnahme abgeleitet, wenn sich ein (dreidimensionales) Gesicht oder seine (zweidimensionale) Abbildung vor einer Kamera bewegt. Fig. 2 zeigt exemplarisch das Verschiebungsvektorfeld der Ecken eines Würfels, der auf einem Foto abgebildet ist, wenn das Foto um seine Längsachse gedreht wird. Fig. 3 zeigt ein korrespondierendes Verschiebungsvektorfeld eines Würfels, wobei es sich hier um einen realen dreidimensionalen Würfel handelt, der um eine Mittelachse gedreht wird. Bei der Aufnahme eines zweidimensionalen Fotos (Fig. 2), das z.B. gekippt oder gedreht wird, liegen die Komponenten der Verschiebungsvektoren jeweils in einer gemeinsamen Ebene. Die Änderung der Komponenten der Verschiebungsvektoren von einem Vektor zum Nächsten innerhalb des Vektorfeldes ist bei näherungsweise äquidistanten Bildelementen somit konstant. Bei der Aufnahme eines realen dreidimensionalen Objektes, das räumliche Tiefe hat (Fig. 3), hängen die Verschiebungsvektoren jedoch sowohl von der Relativbewegung des Objektes zum Aufnahmegerät als auch von den unterschiedlichen Abständen der Objektelemente, z.B. der Ecken des Würfels, zu den Bewegungsachsen des Objektes ab. Die Änderung der Komponenten der Verschiebungsvektoren von einem Vektor zum Nächsten innerhalb des Vektorfeldes ist daher weder konstant noch linear.

In Kenntnis der zu erwartenden Eigenschaften der Vektorfelder, die aufgrund eines realen Gesichtes oder seiner zweidimensionalen Abbildung abgeleitet werden, schlägt die Erfindung ein analytisches Verfahren zur Unterscheidung zwischen den beiden Fallgestaltung oder Klassen von Aufnahmen vor. Gemäss einem Beispiel zum besseren Verständnis kann mit einem geeigneten Näherungsverfahren, z.B. der Methode der kleinsten Fehlerquadrate, jeweils eine Ebene berechnet werden, die den X-Komponenten bzw. den Y-Komponenten des Vektorfeldes angenähert ist. Die X- und Y-Komponenten des Verschiebungsvektorfeldes werden dann mit den an die entsprechenden Komponenten angenäherten Ebenen verglichen. Ist der mittlere Abstand der Vektorkomponenten zu den berechneten Ebenen klein, kann davon ausgegangen werden, dass diese annähernd in einer Ebene liegen, dass es sich also um die Aufnahme eines Fotos handelt. Liegen dagegen die X- und Y-Komponenten des Verschiebungsvektorfeldes in einer nicht-linearen Struktur im Raum, so wird der mittlere Abstand zu den Ebenen groß; es handelt sich dann um ein reales dreidimensionales Objekt vor der Kamera, also um ein reales Gesicht.

Mittels eines Schwellwertes für den mittleren Abstand zwischen den Verschiebungsvektorkomponenten und den berechneten Ebenen kann somit abgeschätzt werden, ob diese Komponenten alle (näherungsweise) auf der Ebene liegen oder nicht und ob somit die Aufnahmen ein reales Objekt (Gesicht) oder sein Abbild zeigen.

Es ist auch möglich, diese Auswertung des Verschiebungsvektorfeldes auf der Grundlage nur seiner X-Komponenten oder nur seiner Y-Komponenten unter Berechnung nur einer entsprechenden Ebene durchzuführen. Durch Auswertung beider Ebenen erhöht sich jedoch die Robustheit des Verfahrens. Auch ist die getrennte Betrachtung von X- und Y- Komponenten mathematisch nicht zwingend erforderlich; die Komponenten können auch gemeinsam in einem höherdimensionalen Raum ausgewertet werden.

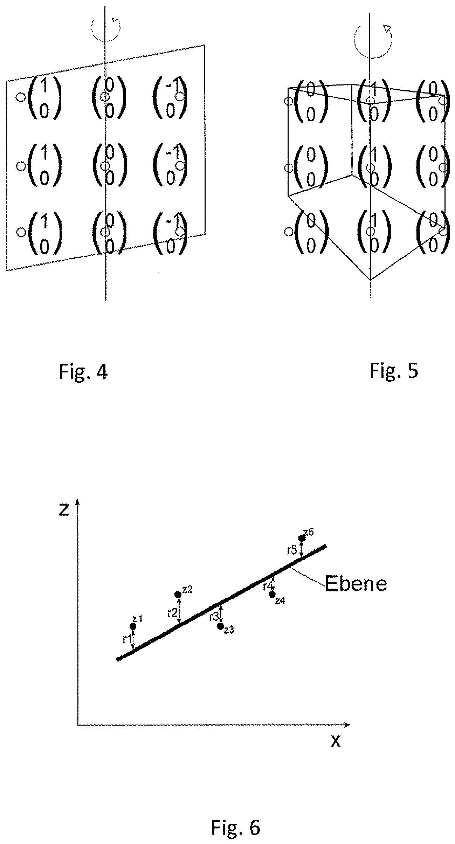

Die Fig. 4 und 5 veranschaulichen das Erzeugen eines Verschiebungsvektorfeldes für eine zweidimensionale Abbildung, die um ihre vertikale Achse gedreht wird (Fig. 4) sowie für ein räumliches Objekt (hier ein Würfel), der um seine vertikale Achse gedreht wird (Fig. 5). Bei dem erfindungsgemäßen Verfahren wird jede Aufnahme in eine Vielzahl von Bildelementen zerlegt, die jeweils eine Vielzahl von Pixeln umfassen. In dem Ausführungsbeispiel der Fig. 4 und 5 ist jede Aufnahme in 3 x 3 Felder aufgeteilt, wobei in der Praxis ein feineres Raster gewählt werden sollte, beispielsweise 8 x 8 Felder oder 16 x 16 Felder. Die Fig. 4 und 5 zeigen die Verschiebungsvektorfelder zwischen einer ersten und einer zweiten Aufnahme, wenn zwischen den beiden Aufnahmen das Foto (Fig. 4) oder das dreidimensionale Objekt (Fig. 5) gedreht wurde. Mit Bezug auf Fig. 4 erkennt man, dass die Bildelemente des Fotos in der Nähe der Drehachse keine horizontale Verschiebung erfahren; die X- Komponente des entsprechenden Vektors ist somit Null. Die von der Drehachse entfernten Bildelemente bewegen sich jedoch, aus Sicht des Aufnahmegerätes, nach rechts bzw. links. Die entsprechende Änderung der Werte der X- Komponenten der Verschiebungsvektoren ist in Fig. 4 vereinfacht mit "1" bzw. "-1" für die Bewegung nach rechts bzw. links angenommen. Diese Änderung von links nach rechts zwischen den beiden Aufnahmen ist linear. Der Einfachheit halber ist eine eventuelle Änderung der Y-Komponenten in diesem stark vereinfachten Beispiel vernachlässigt. Vergleicht man dies mit Fig. 5, so erkennt man, dass bei Drehung, oder einer anderen Verschiebung, eines realen Objekts die Änderung der Verschiebungsvektorkomponenten von der Tiefe des Objekts abhängig sind. Die Änderung der Komponenten der Vektoren von links nach rechts ist nicht linear.

Durch Analyse des Verschiebungsvektorfeldes kann somit entschieden werden, ob die Aufnahme von dem realen Objekt oder von seiner Abbildung gemacht wurden.

Im folgenden Beispiel werden die Unterschiede der Verschiebungsvektorfelder ausgewertet, indem nach der Methode der kleinsten Fehlerquadrate (least square fit) die bestmögliche Ebene durch die X-Komponente des Vektorfeldes sowie die bestmögliche Ebene durch die Y-Komponenten des Vektorfeldes berechnet wird. Die Koordinaten des Vektorfeldes dienen dabei als unabhängige Variable, während die Verschiebungskomponenten X, Y als "Höhe" z aufzufassen ist. Die allgemeine Ebenengleichung lautet dann:

$$F(x,y) = z = a_0 + a_1 x + a_2 y$$

Die optimalen Werte für $a_0$, $a_1$ und $a_2$ werden mit den gegebenen z-Werten (den X- oder Y-Komponenten des Verschiebungsvektorfeldes) und dem Verfahren der kleinsten Fehlerquadrate (Least-Square-Fit) berechnet.

Hierzu werden zunächst die Abweichungen (Näherungsfehler) aller Vektorfeldkomponenten zu der noch unbekannten Ebene als Gleichungen betrachtet. In der numerischen Mathematik spricht man hier von Residuen, wie in Figur 6 dargestellt:

$$r_1 = F(x_1, y_1) - z_1$$

$$r_2 = F(x_2, y_2) - z_2$$

$$r_3 = F(x_3, y_3) - z_3$$

$$r_n = F(x_n, y_n) - z_n$$

Ziel der Berechnung ist, diejenige Ebene (mit $a_0$, $a_1$ und $a_2$) zu finden, bei der die Summe aller Residuen (=Abweichungen) minimal ist. Um keine Rücksicht auf positive und negative Abweichungen nehmen zu müssen, werden die Residuen quadriert:

$$\widetilde{F}(a_0, a_1, a_2) = \sum_{i=0}^{n} r_i^2 \overset{!}{=} \min$$

$$\widetilde{F}(a_0, a_1, a_2) = \sum_{i=0}^{n} (F(x_i, y_i) - z_i)^2 \overset{!}{=} \min$$

$$\widetilde{F}(a_0, a_1, a_2) = \sum_{i=0}^{n} (a_0 + a_1 x_i + a_2 y_i - z_i)^2 \overset{!}{=} \min$$

Um $\tilde{F}$ zu minimieren gilt die notwendige Bedingung, dass die Ableitungen nach den drei Variablen $a_0$, $a_1$ und $a_2$ gleich 0 sein müssen.

$$\frac{d\tilde{F}}{da_0} = \sum_{i=0}^{n} 2 * \left(a_0 + a_1 x_i + a_2 y_i - z_i\right) * 1 \overset{!}{=} 0$$

$$\frac{d\tilde{F}}{da_1} = \sum_{i=0}^{n} 2 * \left(a_0 + a_1 x_i + a_2 y_i - z_i\right) * x_i \overset{!}{=} 0$$

$$\frac{d\tilde{F}}{da_2} = \sum_{i=0}^{n} 2 * \left(a_0 + a_1 x_i + a_2 y_i - z_i\right) * y_i \overset{!}{=} 0$$

Es ergeben sich somit drei Gleichungen mit drei Unbekannten $a_0$, $a_1$ und $a_2$, die z. B. mit dem Gaußschen Eliminationsverfahren berechnet werden können. Theoretisch ist es zwar möglich, dass es keine oder mehrere uneindeutige Lösungen des Gleichungssystems gibt, dies ist jedoch in dem Anwendungsfall des Beispiels ausgeschlossen, weil x und y in einem vorgegebenen Raster liegen.

In dem in Fig. 4 und 5 gegebenen Beispiel sind die Ebenengleichungen leicht ablesbar: Wenn die Aufnahme eines Fotos vorliegt (Fig. 4), wäre die Ebene $F_1(x, y) = 0 - 1x + 0y$.

Wenn die Aufnahme eines dreidimensionalen Würfels vorliegt (Fig. 5), wäre die Ebene eine Konstante $F_2(x,y) = 3/9 + 0x + 0y$.

Die Ebene des Fotos, $F_1$, verläuft exakt durch die ermittelten Verschiebungskomponenten; während bei der aus der Drehung des Würfels ermittelten Ebene, $F_2$, alle Verschiebungskomponenten Abweichungen von 3/9 bzw. 6/9 haben. Die planare Ebene $F_2$ kann unmöglich durch alle Verschiebungsvektorkomponenten verlaufen.

Aufgrund der so ermittelten, an die Verschiebungsvektorkomponenten angenäherten Ebenen können auch die Abweichung der einzelnen Verschiebungsvektoren zu diesen Ebenen berechnet werden. Wenn sich das Verschiebungsvektorfeld insgesamt linear verhält, also aus der Aufnahme eines zweidimensionalen Fotos abgeleitet wurde, ist zu erwarten, dass die Ebene sehr gut zu dem Verschiebungsvektorfeld passt und somit die Abweichungen gering sind. Sind im umgekehrten Fall viele nicht-lineare Veränderungen in den Komponenten des Verschiebungsvektorfeldes, so stellt die berechnete Ebene eine schlechte Annäherung an das Verschiebungsvektorfeld dar und die Abweichungen werden im Mittel sehr hoch sein. Dieser mittlere Fehler, d.h. der Mittelwert der Beträge der Abweichungen, der Verschiebungsvektorfeldkomponenten zu den berechneten Ebenen kann ein Entscheidungskriterium bilden, um zu bestimmen, ob das Verschiebungsvektorfeld aus zwei Bildern eines zweidimensionalen Fotos oder zwei Bildern eines Gesichtes generiert wurde. Dies kann schlichtweg anhand eines geeignet festgelegten Schwellwertes überprüft werden, wobei der Schwellwert so gewählt sein sollte, dass Abweichungen aufgrund von Rauschen der Aufnahmen die Entscheidung nicht beeinflussen.

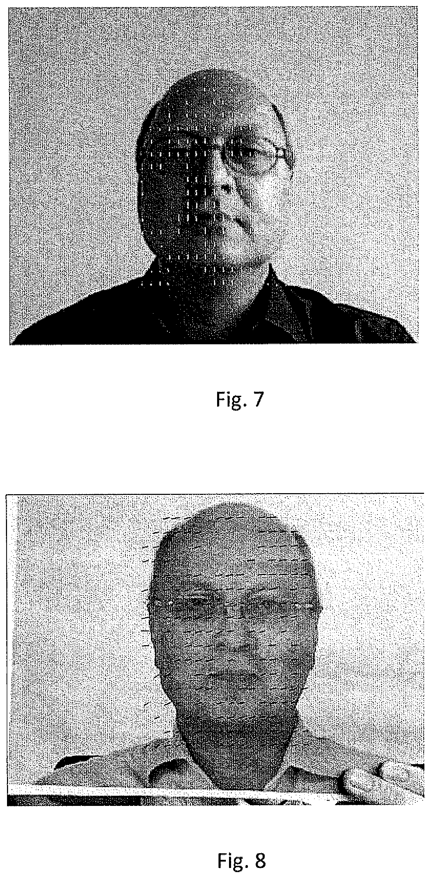

Die Fig. 7 und 8 zeigen beispielhaft ein Verschiebungsvektorfeld, das auf der Grundlage der Aufnahme eines realen Gesichtes erzeugt wurde (Fig. 7) und ein Verschiebungsvektorfeld einer Fotografie des Gesichtes (Fig. 8). Aus dem Vergleich der beiden Figuren ist erkennbar, dass das Verschiebungsvektorfeld des Fotos des Gesichtes weitgehend linear ist, während die Verschiebungsvektoren des realen Gesichtes, abhängig von der Lage des entsprechenden Bildelementes unterschiedliche Beträge und Richtungen haben können.

Aus den Fig. 7 und 8 ist auch zu erkennen, dass die Erfindung für manche Bildelemente keine Verschiebungsvektoren erzeugt. Dabei handelt es sich um solche Bildelemente, für die das erste oder das zweite Gütekriterium ergibt, dass sie keinen aussagekräftigen Beitrag zu dem Verschiebungsvektorfeld erzeugen. Dies kann daran liegen, dass es sich um Bildelemente mit geringer Varianz der Bildintensität handelt. Bildelemente mit geringer Varianz, wie Backen und Stirn, werden nicht zur Bildung des Verschiebungsvektorfeldes herangezogen. Andererseits kann es sich auch um Bildelemente handeln, in denen möglicherweise Messfehler aufgetreten sind. Messfehler werden erkannt, wenn ein Bildelement und sein verschobenes Bildelement eine sehr große Differenz in der Intensität zeigen, so dass die Korrelation möglicherweise fälschlich eine Übereinstimmung zeigt. Solche Bildelemente nehmen ebenfalls nicht an der Bildung des Verschiebungsvektorfeldes teil.

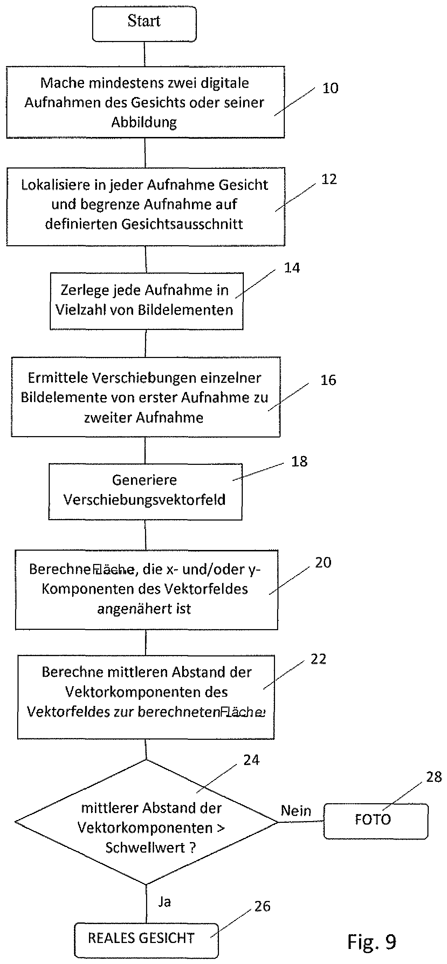

Ein Flussdiagramm des erfindungsgemäßen Verfahrens ist in Fig. 9 dargestellt. Das Verfahren beginnt in Schritt 10 mit der Aufnahme von mindestens zwei digitalen Bildern eines Gesichts oder seiner Abbildung. Vorzugsweise werden nicht mehr als 20, besonders bevorzugt nicht mehr als 10 oder sogar nicht mehr als 5 digitale Aufnahmen des Gesichts dem erfindungsgemäßen Verfahren zugrunde gelegt. In einer besonders bevorzugten Ausführung werden genau zwei digitale Aufnahmen des Gesichts oder seiner Abbildung verwendet.

In einem nächsten (optionalen) Schritt 12 wird in jeder Aufnahme das Gesicht lokalisiert, und die Aufnahme wird auf einen definierten Gesichtsausschnitt begrenzt. Hierbei kommen an sich bekannte Verfahren zur Gesichtslokalisierung zum Einsatz.

Anschließend wird im Schritt 14 jede Aufnahme in mehrere Bildelemente zerlegt. Hierbei wird vorzugsweise ein regelmäßiges Raster von n x m Feldern über die gewählten Bildausschnitte gelegt, beispielsweise ein Raster von 8 x 8 oder 16 x 16 Feldern. Versuche in der Praxis haben ergeben, dass für eine erfolgreiche Auswertung des Verschiebungsvektorfeldes, auch nach der Anwendung der beschriebenen Gütekriterien, noch wenigstens 20 Verschiebungsvektoren vorhanden sein sollten.

Im nächsten Schritt 16 wird die Verschiebung einzelner Bildelemente von der ersten zur zweiten Aufnahme und ggf. von einer zweiten zur dritten Aufnahme u.s.w. ermittelt. Hierbei kommen an sich bekannte Korrelationsverfahren zum Einsatz, wobei bevorzugt der Sequential Similarity Detection (SSD)-Algorithmus verwendet wird. Der Vorteil dieses Algorithmus ist, dass er, beispielsweise im Vergleich zur Kreuzkorrelation, wenig rechenaufwendig ist und dass die Berechnung dann vorzeitig abgebrochen werden kann, wenn die aktuelle Summe das zuletzt gefundene Minimum überschreitet.

Aus den einzelnen Verschiebungen der Bildelemente wird in Schritt 18 ein Verschiebungsvektorfeld erzeugt. Dieses Verschiebungsvektorfeld wird erfindungsgemäß durch analytische Verfahren ausgewertet, um zu entscheiden, ob die Aufnahmen von dem realen Gesicht oder seiner Abbildung gemacht wurden. Die Erfindung nutzt hierfür die Kenntnis der zu erwartenden Eigenschaften des Vektorfeldes bei Aufnahme eines Fotos bzw. bei Aufnahme eines räumlichen Objekts, um eine qualifizierte Entscheidung treffen zu können. Es ist nicht notwendig, nach bestimmten Gesichtsstrukturen zu suchen.

Erfindungsgemäss wird zur Analyse des Verschiebungsvektorfeldes, in Schritt 20, wenigstens eine nicht-ebene analytisch beschreibbare glatte Fläche berechnet, die den X-Komponenten und/oder den Y-Komponenten des Vektorfeldes angenähert ist, und anschließend wird, in Schritt 22, der mittlere Abstand der Vektorkomponenten des Vektorfeldes zu dieser Fläche berechnet, wie oben eingehend erläutert.

Schließlich wird im Schritt 24 überprüft, ob der mittlere Abstand der Vektorkomponenten größer ist als ein vorgegebener Schwellwert. Wenn ja, wird im Schritt 26 ein reales Gesicht erkannt; wenn nein, wird in Schritt 28 eine Abbildung (Foto) des Gesichtes erkannt.

Zusätzlich können, wie oben erläutert, vor und nach der Erzeugung des Verschiebungsvektorfeldes Gütekriterien eingesetzt werden, um letztendlich nur solche Bildelemente an der Bildung des Verschiebungsvektorfeldes teilnehmen zu lassen, die ein aussagekräftiges Ergebnis liefern.

In der bevorzugten Ausführungsform der Erfindung ist in Schritt 10 zusätzlich vorgesehen, dass der Person vor der Kamera mindestens zwei unterschiedliche Gesichtspositionen vorgegeben werden, um einen möglichst aussagekräftigen Verschiebungsvektor bilden zu können. Beispielsweise wird über eine Bildschirmanzeige signalisiert, dass die Person ihr Gesicht zunächst nach links und dann nach rechts wenden soll, während die Aufnahmen gemacht werden. Darüber hinaus können die Aufnahmen auch dazu verwendet werden, mit an sich bekannten biometrischen Erfassungsverfahren eine Person zu identifizieren.

Die Erfindung wird vorzugsweise eingesetzt in einer verteilten IT-Infrastruktur, wie einer Cloud-Rechenumgebung, wobei die digitalen Aufnahmen des Gesichts einer Person an einer Workstation der Person gemacht werden. Anschließend können die Aufnahmen über das Internet oder ein anderes Netzwerk an einen entfernten Rechner, Server, in ein Cloudcomputing-Rechnernetzwerk oder dergleichen gesandt werden. Dort werden die Aufnahmen mit dem erfindungsgemäßen Verfahren auf einem von der Person entfernten Rechner oder in einer verteilten Rechenstruktur verarbeitet, um schließlich zu entscheiden, ob die Aufnahmen von dem realen Gesicht der Person oder von einem Foto des Gesichts stammen. Abhängig von der Entscheidung können weitere Schritte zur Identifizierung und Autorisierung der Person, die jedoch nicht Gegenstand der Erfindung sind, durchgeführt werden.

Die Erfindung kann auf allen üblichen Rechnern und in jeder geeigneten Infrastruktur, vorzugsweise in Form eines Computerprogramms, realisiert werden.

**Patentansprüche**

**1.** Verfahren zur Unterscheidung zwischen einem realen Gesicht und einer zweidimensionalen Abbildung des Gesichts in Form eines gekrümmten Fotos in einem biometrischen Erfassungsprozess, bei dem

a) in zeitlicher Folge nacheinander mindestens zwei digitale Aufnahmen des Gesichts oder seiner Abbildung gemacht werden (10),
b) jede der Aufnahmen in eine Vielzahl von Bildelementen zerlegt wird (14), wobei jedes Bildelement eine Vielzahl von Pixeln umfasst,

c) die Verschiebungen einzelner Bildelemente von der ersten Aufnahme zur zweiten Aufnahme durch Korrelation ermittelt werden (16) und daraus ein Verschiebungsvektorfeld generiert wird (18), und

d) das Verschiebungsvektorfeld analysiert wird, um zu entscheiden, ob die Aufnahmen von dem realen Gesicht oder von seiner Abbildung gemacht wurden (24, 26, 28),

**dadurch gekennzeichnet, dass** zur Analyse des Vektorfeldes wenigstens eine nicht-ebene analytisch beschreibbare glatte Fläche berechnet wird, die an die x- und/oder y-Komponenten des Vektorfeldes angenähert ist (20), und der Abstand der Vektorkomponenten des Vektorfeldes zu der berechneten Fläche ermittelt wird (22).

2. Verfahren nach Anspruch 1, wobei für jedes Bildelement ein Verschiebungsvektor auf der Grundlage der Position desselben Bildelements in der ersten Aufnahme und der zweiten Aufnahme erzeugt wird.

3. Verfahren nach Anspruch 1 oder 2, wobei zwischen den Schritten a) und b) in jeder Aufnahme das Gesicht lokalisiert wird und für die Weiterverarbeitung die Aufnahme auf einen definierten Gesichtsausschnitt begrenzt wird (12).

4. Verfahren nach einem der vorangehenden Ansprüche, wobei in Schritt b) jede Aufnahme in ein regelmäßiges Raster von N x M Feldern aufgeteilt wird, welche die Bildelemente bilden, wobei die Anzahl der Felder vorzugsweise in der Größenordnung zwischen 64 und 576 liegt.

5. Verfahren nach Anspruch 4, wobei M = N, insbesondere M = N = 8 oder M = N = 16.

6. Verfahren nach einem der vorangehenden Ansprüche, wobei in Schritt c) die Korrelation auf der Basis der Bildintensitäten der Grauwerte der Bildelemente durchgeführt wird.

7. Verfahren nach Anspruch 6, wobei in Schritt c) die Korrelation auf der Grundlage eines Sequential Similarity Detection, SSD, Algorithmus ausgeführt wird.

8. Verfahren nach Anspruch 6 oder 7, wobei die Differenz der Bildintensitäten zwischen einem Bildelement der ersten Aufnahme und der zweiten Aufnahme für eine Reihe von Positionen des Bildelementes in der zweiten Aufnahme berechnet wird,

für jede Position in der Reihe von Positionen die Differenz der Bildintensitäten an der aktuellen Position mit der Differenz der Bildintensitäten an der vorhergehenden Position verglichen wird,

wenn die Differenz der Bildintensitäten an der aktuellen Position kleiner ist als die Differenz der Bildintensitäten an der vorhergehenden Position, die aktuelle Differenz als minimale Differenz angenommen wird, und wenn die Differenz der Bildintensitäten an der aktuellen Position größer ist als die Differenz der Bildintensitäten an der vorhergehenden Position, die vorhergehende Differenz als endgültige minimale Differenz angenommen wird und der Vergleich abgebrochen wird,

wobei die Position des Bildelementes in der zweiten Aufnahme der Position entspricht, bei der die endgültige minimale Differenz ermittelt wurde.

9. Verfahren nach einem der vorangehenden Ansprüche, wobei in Schritt c) die Korrelation auf Teilbereiche der Aufnahmen beschränkt wird, die aufgrund der Kenntnis der grundsätzlichen Bildstruktur und/oder der Auswertung vorhergehender Aufnahmen bestimmt werden.

10. Verfahren nach Anspruch 9, wobei ein Teilbereich nicht größer ist als die Fläche, die durch eine Verschiebung des Bildelementes um seine Kantenlänge in beliebiger Richtung definiert wird.

11. Verfahren nach einem der vorangehenden Ansprüche, wobei vor Ausführung der Korrelation in Schritt c) die Bildelemente daraufhin geprüft werden, ob die Pixel jeweils innerhalb eines Bildelementes eine Varianz aufweisen, die größer ist als ein erster Schwellwert, und nur solche Bildelemente in Schritt c) weiterverarbeitet werden, deren Varianz den Schwellwert überschreitet.

12. Verfahren nach einem der vorangehenden Ansprüche, wobei nach Ausführung der Korrelation in Schritt c) die Bildelemente und ihre verschobenen Bildelemente verglichen werden, und wenn die Differenz der Intensitäten eines Bildelementes und seines verschobenen Bildelementes über einem zweiten Schwellwert liegt, der Verschiebungsvektor dieses Bildelementes verworfen wird.

13. Verfahren nach einem der vorangehenden Ansprüche, wobei die Fläche mittels eines Näherungsverfahrens, insbesondere nach der Methode der kleinsten Fehlerquadrate berechnet wird (20) und/oder wobei der mittlere Abstand der Vektorkomponenten zu der berechneten Fläche ermittelt wird (22).

14. Verfahren nach einem der vorangehenden Ansprüche, wobei der ermittelte Abstand der Vektorkomponenten zu der berechneten Fläche mit einem dritten Schwellwert verglichen und entschieden wird (24), dass die Aufnahmen von einem realen Gesicht gemacht wurden, wenn der Abstand den Schwellwert überschreitet (26), und dass andernfalls die Aufnahmen von einer Abbildung gemacht wurden (28).

15. Verfahren zur Identifizierung einer Person in einer verteilten IT-Infrastruktur, insbesondere einer Cloud-Umgebung, bei dem mindestens zwei digitale Aufnahmen des Gesichts der Person an einem von dem Person entfernten Rechner empfangen und das Verfahren gemäß einem der vorangehenden Ansprüche an einem oder verteilt auf mehrere von der Person entfernten Rechner ausgeführt wird, wobei die Aufnahmen des Gesichts der Person auch dazu verwendet werden, die Person zu identifizieren.

## Claims

1. A method for distinguishing between a real face and a two-dimensional image of the face in the form of a curved photograph in a biometric detection process, wherein

   a) at least two digital photographs of the face or its image are taken consecutively in a time sequence (10),
   b) each of the photographs is split up into a multiplicity of image elements (14), wherein each image element comprises a multiplicity of pixels,
   c) the displacements of the individual image elements from the first photograph to the second photograph are ascertained by correlation (16) and a displacement vector field is generated therefrom (18), and
   d) the displacement vector field is analysed to decide whether the photographs have been taken of the real face or its image (24, 26, 28),

   **characterised in that**, in order to analyse the vector field, at least one non-plane analytically describable smooth surface is calculated, which is approximated to the x- and/or y-components of the vector field (20), and the distance of the vector components of the vector field from the calculated surface is determined (22).

2. The method according to claim 1, wherein for each image element a displacement vector is generated on the basis of the position of the same image element in the first photograph and the second photograph.

3. The method according to claim 1 or 2, wherein, between steps a) and b), the face is localised in each photograph and, for the further processing, the photograph is limited to a defined segment of the face (12).

4. The method according to any one of the preceding claims, wherein in step b) each photograph is split up into a regular grid of N x M fields, which form the image elements, wherein the number of fields preferably lies in the order of magnitude between 64 and 576.

5. The method according to claim 4, wherein M = N, in particular M = N = 8 or M = N = 16.

6. The method according to any one of the preceding claims, wherein in step c) the correlation is carried out on the basis of the image intensities of the grey values of the image elements.

7. The method according to claim 6, wherein in step c) the correlation is carried out on the basis of a sequential similarity detection, SSD, algorithm.

8. The method according to claim 6 or 7, wherein the difference in the image intensities between an image element of the first photograph and of the second photograph is calculated for a series of positions of the image element in the second photograph,
   the difference in the image intensities at the current position is compared with the difference in the image intensities at the preceding position for each position in the series of positions,
   when the difference in the image intensities at the current position is smaller than the difference in the image intensities at the preceding position, the current difference is adopted as the minimum difference, and when the difference in the image intensities at the current position is greater than the difference in the image intensities at the preceding position, the preceding difference is adopted as the definitive minimum difference and the comparison is terminated,

wherein the position of the image element in the second photograph corresponds to the position at which the definitive minimum difference was ascertained.

9. The method according to any one of the preceding claims, wherein in step c) the correlation is limited to partial regions of the photographs, which are determined on the basis of the knowledge of the basic image structure and/or the evaluation of preceding photographs.

10. The method according to claim 9, wherein a partial region is not greater than the area which is defined by a displacement of the image element by its edge length in any direction.

11. The method according to any one of the preceding claims, wherein, before the correlation is carried out in step c), the image elements are examined to see whether the pixels inside an image element in each case have a variance which is greater than a first threshold value, and only those image elements are further processed in step c) whose variance exceeds the threshold value.

12. The method according to any one of the preceding claims, wherein, after the correlation has been carried out in step c), the image elements and their displaced image elements are compared, and if the difference in the intensities of the image element and its displaced image element lies above a second threshold value, the displacement vector of this image element is rejected.

13. The method according to any one of the preceding claims, wherein the area is calculated by means of an approximation method, in particular using the method of least squares (20), and/or wherein the mean distance of the vector components from the calculated area is determined (22).

14. The method according to any one of the preceding claims, wherein the ascertained distance of the components from the calculated area is compared with a third threshold value and it is decided (24) that the photographs have been taken of a real face if the distance exceeds the threshold value (26), and that otherwise the photographs of an image have been taken (28).

15. A method for identifying a person in a dispersed IT infrastructure, in particular of a cloud environment, in which at least two digital photographs of the face of the person are received on a computer remote from the person and the method according to any one of the preceding claims is carried out on a computer remote from the person or distributed on a plurality of computers remote from the person, wherein the photographs of the face of the person are also used to identify the person.

**Revendications**

1. Procédé de différenciation entre un visage réel et une représentation bidimensionnelle du visage sous la forme d'une photo incurvée dans un processus de détection biométrique, dans lequel

a) au moins deux prises de vues numériques du visage ou de sa représentation sont effectuée (10) l'une après l'autre,
b) chacune des prises de vues sont décomposées en une pluralité d'éléments d'images (14), chaque élément d'image comprenant une pluralité de pixels,
c) les décalages de certains éléments d'images entre la première prise de vue et la deuxième prise de vue sont déterminées par corrélation (16), et un champ vectoriel de décalage est généré (18),
d) le champ vectoriel de décalage est analysé afin de décider si les prises de vues sont des prises de vues du visage réel ou de sa représentation (24, 26, 28),

**caractérisé en ce que**
pour l'analyse du champ vectoriel, au moins une surface lisse non plane et descriptible de manière analytique est calculée, qui est rapprochée des composantes x et/ou y du champ vectoriel (20), et la distance entre les composantes vectorielles du champ vectoriel et la surface calculée est déterminée (22).

2. Procédé selon la revendication 1, moyennant quoi, pour chaque élément d'image, un vecteur de décalage est généré dans la première prise de vue et la deuxième prise de vue sur la base de la position du même élément d'image.

3. Procédé selon la revendication 1 ou 2, moyennant quoi, entre les étapes a) et b), dans chaque prise de vue, le visage est localisé et, pour le traitement ultérieur, la prise de vue est limitée à une découpe définie du visage (12).

4. Procédé selon l'une des revendications précédentes, moyennant quoi, à l'étape b), chaque prise de vue est répartie dans une trame régulière de N x M champs, que constituent les éléments d'images, le nombre de champs étant de préférence de l'ordre de 64 à 576.

5. Procédé selon la revendication 4, moyennant quoi M = N, plus particulièrement M = N = 16.

6. Procédé selon l'une des revendications précédentes, moyennant quoi, à l'étape c), la corrélation est effectuée sur la base des intensités des valeurs de gris des éléments d'images.

7. Procédé selon la revendication 6, moyennant quoi, à l'étape c), la corrélation est effectuée sur la base d'un algorithme Séquentiel Similarity Détection SSD.

8. Procédé selon la revendication 6 ou 7, la différence des intensités d'images entre un élément d'image de la première prise de vue et un élément d'image de la deuxième prise de vue est calculée pour une série de positions de l'élément d'image dans la deuxième prise de vue,
pour chaque position dans la série de position, la différence des intensités d'images à la position actuelle est comparée à la différence des intensités d'images à la position précédente,
lorsque la différence des intensités d'images à la position actuelle est inférieure à la différence des intensités d'images à la position précédente, la différence actuelle est considérée comme une différence minimale et lorsque la différence des intensités d'images à la position actuelle est supérieure à la différence des intensités d'images à la position précédente, la différence précédente est considérée comme la différence minimale définitive et la comparaison est interrompue,
la position de l'élément d'image dans la deuxième prise de vue correspondant à la position à laquelle la différence minimale définitive a été déterminée.

9. Procédé selon l'une des revendications précédentes, moyennant quoi à l'étape c), la corrélation est limitée à des zones partielles de prises de vues qui sont déterminées sur la base de la connaissance de la structure de base de l'image et/ou de l'analyse de prises de vues précédentes.

10. Procédé selon la revendication 9, une zone partielle n'étant pas supérieure à la surface qui est définie par un décalage de l'élément d'image sur sa longueur de bord dans une direction quelconque.

11. Procédé selon l'une des revendications précédentes, moyennant quoi, avant l'exécution de la corrélation à l'étape c), les éléments d'images sont en outre contrôlés afin de savoir si les pixels présentent, à l'intérieur d'un élément d'image, une variance supérieure à une première valeur seuil et seuls les éléments d'images dont la variance dépasse la valeur seuil sont traités à l'étape c).

12. Procédé selon l'une des revendications précédentes, moyennant quoi, après l'exécution de la corrélation à l'étape c), les éléments d'images et les éléments d'images décalés sont comparés et, lorsque la différence des intensités d'un élément d'image et de l'élément d'image décalé est supérieure à une deuxième valeur seuil, le vecteur de décalage de cet élément d'image est rejeté.

13. Procédé selon l'une des revendications précédentes, la surface étant calculée au moyen d'un procédé d'approximation, plus particulièrement selon la méthode des moindres carrés (20) et/ou la distance moyenne entre les composantes vectorielles et la surface calculée est déterminée (22).

14. Procédé selon l'une des revendications précédentes, la distance déterminée entre les composantes vectorielles et la surface calculée est comparée avec une troisième valeur seuil et il est décidé (24) que les prises de vues sont réalisées à partir d'un visage réel lorsque la distance dépasse la valeur seuil (26) et, dans le cas contraire, que les prises de vues ont été prises à partir d'une représentation (28).

15. Procédé d'identification d'une personne dans une infrastructure informatique distribuée, plus particulièrement un environnement de type cloud, dans lequel au moins deux prises de vues numériques du visage de la personne sont reçues par un ordinateur éloigné de la personne et le procédé est exécuté selon l'une des revendications précédentes au niveau d'un ordinateur ou de manière répartie sur plusieurs ordinateurs éloignés de la personne, les prises de vues du visage de la personne étant également utilisées pour identifier la personne.

Foto des Objekts

reales Objekt

1. Aufnahme

Kamera

Kamera

2. Aufnahme

Kamera

Kamera

Fig. 1

Fig. 2

Fig. 3

Fig. 4

Fig. 5

Fig. 6

Fig. 7

Fig. 8

Start

Mache mindestens zwei digitale Aufnahmen des Gesichts oder seiner Abbildung — 10

Lokalisiere in jeder Aufnahme Gesicht und begrenze Aufnahme auf definierten Gesichtsausschnitt — 12

Zerlege jede Aufnahme in Vielzahl von Bildelementen — 14

Ermittele Verschiebungen einzelner Bildelemente von erster Aufnahme zu zweiter Aufnahme — 16

Generiere Verschiebungsvektorfeld — 18

Berechne Fläche, die x- und/oder y-Komponenten des Vektorfeldes angenähert ist — 20

Berechne mittleren Abstand der Vektorkomponenten des Vektorfeldes zur berechneten Fläche — 22

mittlerer Abstand der Vektorkomponenten > Schwellwert ? — 24

Nein → FOTO — 28

Ja — 26

REALES GESICHT

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19847261
- US 20090135188 A1
- EP 1434163 B1
- EP 1119822 B1

**In der Beschreibung aufgeführte Nicht-Patentliteratur**

- **CHIA-MING WANG et al.** Distinguishing Falsification of Human Faces from True Faces based on Optical Flow Information. *IEEE International Symposium on Circuits and Systems,* 2009
- **TANZEEM CHOUDHURY et al.** Multimodal Person Recognition using Unconstrained Audio and Video. *MIT Media Lab AV BPA,* 1999
- **CHAO-KUEI HSIEH et al.** An Optical Flow-Based Approach to Robust Face Recognition Under Expression Variations. *IEEE Transactions on Image Processing,* 2010
- **BRUCE D. LUCAS et al.** An Iterative Image Registration Technique with an Application to Stereo Vision. *Proceedings of Imaging Understanding Workshop,* 1981
- Beiträge zur Automatischen Dreidimensionalen Bewegungsanalyse. **R. FRISCHHOLZ.** Dissertation. Shaker Verlag, 1998
- **JING et al.** Anti-Spoofing System for RFID Access Control combining with Face Recognition. *International Conference on Machine Learning and Cybernetics,* 2010, 698-703
- **BAO et al.** A Liveness Detection Method for Face Recognition based on Optical Flow Field. *International Conference on Image Analysis and Signal Processing,* 2009, 233-236
- **BERTHOLD K.P. HORN et al.** Determining Optical Flow. *Artificial Intelligence,* 1981, vol. 17 (1-3), 185-203
- **D. I. BARNEA ; H. F. SILVERMAN.** A Class of Algorithms for Fast Digital Image Registration. *IEEE Transactions on Computers,* Februar 1972, vol. C-21, 179-186